# EUROPEAN PATENT SPECIFICATION

(11) **EP 3 171 478 B1**
(45) Date of publication and mention of the grant of the patent: **05.10.2022**
(21) Application number: 15821660.6
(22) Date of filing: 09.07.2015
(51) Int. Cl.: H02J 3/38, H02M 7/48

(54) **PHOTOVOLTAIC GRID-CONNECTED INVERTER AND CONTROL METHOD THEREOF**
FOTOVOLTAIKNETZGEKOPPELTER WECHSELRICHTER UND STEUERUNGSVERFAHREN DAFÜR
ONDULEUR PHOTOVOLTAÏQUE RACCORDÉ AU RÉSEAU ET SON PROCÉDÉ DE COMMANDE

(30) Priority: 15.07.2014 CN 201410335465
(43) Date of publication of application: 24.05.2017
(73) Proprietor: Sungrow Power Supply Co., Ltd., Hefei, Anhui 230088 (CN)
(72) Inventor: SUN, Wei, Heifei, Anhui 230088 (CN); ZHENG, Qun, Heifei, Anhui 230088 (CN); WANG, Changyou, Heifei, Anhui 230088 (CN); LI, Haoyuan, Hefei, Anhui 230088 (CN)
(74) Representative: Zacco Norway AS
(86) International application number: PCT/CN2015/083628
(87) International publication number: WO 2016/008382

(56) References cited:
- EP-A2- 2 166 638
- CN-A- 104 158 208
- CN-U- 201 479 008
- CN-U- 202 364 144
- CN-U- 204 243 781
- CN-Y- 201 352 761
- JP-A- 2010 093 978
- US-A1- 2009 284 232
- US-A1- 2010 295 381
- US-A1- 2011 285 375
- US-A1- 2012 319 489
- US-A1- 2014 177 299

## Description

### TECHNICAL FIELD

The present disclosure relates to a grid-connected single-stage photovoltaic inverter, and in particular to a grid-connected single-stage photovoltaic inverter including a DC to AC inverter circuit, and a control method and an application thereof.

### BACKGROUND

In order to perform normal grid-connected power generation, a grid-connected photovoltaic inverter is required to meet a predetermined grid connection condition. For example, a direct current bus voltage of the grid-connected photovoltaic inverter is required not to be less than a peak of a grid voltage. To improve operating efficiency of the grid-connected photovoltaic inverter, inverter manufacturers usually arrange many solar panels to improve an open-circuit voltage of a photovoltaic array, or arrange a DC to DC voltage booster circuit which matches a DC to AC inverter circuit in terms of a power capacity at a front end of the DC to AC inverter circuit, to meet the grid connection condition.

For a situation that the DC to DC voltage booster circuit which matches the DC to AC inverter circuit in terms of the power capacity is arranged at the front end of the DC to AC inverter circuit, a general design thought is to achieve, by the DC to DC voltage booster circuit at the front end, a voltage boosting function for a voltage outputted by the photovoltaic array. In this case, the photovoltaic array does not need to be provided with many solar panels. In practice, the design though has the following shortcomings: a high cost due to the power capacity of the DC to DC voltage booster circuit matching the power capacity of the DC to AC inverter circuit, and low overall efficiency of the inverter due to the fact that a great switching loss is caused since the DC to DC voltage booster circuit needs to operate together with the DC to AC inverter circuit for a long time. As an improvement, a contactor is connected in parallel with the DC to DC voltage booster circuit. In some special situations, for example, adequate sunlight being available and the grid connection condition being met, the contactor is turned on, and the DC to DC voltage booster circuit may stop operating for a short time. The improvement can not solve the problem of a high cost, while the switching loss is reduced and the conversion efficiency is improved.

For a situation in the conventional technology that a grid-connected single-stage photovoltaic inverter including a DC to AC inverter circuit is used, inverter manufacturers usually arrange many photovoltaic panels to improve an open-circuit voltage of a photovoltaic array. The grid-connected single-stage photovoltaic inverter has advantages such as a simple circuit, an output power up to several megawatts and a low unit cost of power generation, and is widely applied to larger photovoltaic power stations. Although an appropriate number of photovoltaic panels are provided, the grid connection condition still can not be met in a situation of low radiation such as in the morning and evening, or on a cloudy or rainy day. Hence, the grid-connected photovoltaic inverter can not perform grid-connected power generation, which results in a loss in power generation amount. The document US2009/282232 A discloses a grid-connected photovoltaic converter comprising an inverter circuit connected in cascade to a DC-DC booster circuit connected, at its input, to a photovoltaic array, and a bypass element connected in parallel with the voltage booster circuit.

### SUMMARY

In view of the above, the present disclosure is to provide a grid-connected single-stage photovoltaic inverter which can increase power generation amount as compared with a conventional grid-connected single-stage photovoltaic inverter.

A grid-connected single-stage photovoltaic inverter is provided according to the independent claim 1, which inter alia includes a DC to AC inverter circuit, a DC to DC voltage booster circuit and a bypass element. An output of the DC to AC inverter circuit is connected to an alternating current grid. The DC to DC voltage booster circuit is connected in series between a photovoltaic array and the DC to AC inverter circuit. The bypass element is connected in parallel with the DC to DC voltage booster circuit. A rated power capacity Pdc of the DC to DC voltage booster circuit is less than a rated power capacity Pac of the DC to AC inverter circuit.

Further, the rated power capacity Pdc of the DC to DC voltage booster circuit being less than the rated power capacity Pac of the DC to AC inverter circuit includes: Pdc<0.5Pac.

The grid-connected single-stage photovoltaic inverter further includes a control circuit configured to control the bypass element to be turned on or turned off. The control circuit controls the bypass element to be turned off and controls the DC to DC voltage booster circuit to operate, in a case that a voltage Upv_mppt at a maximum power point of the photovoltaic array is less than a voltage peak of the alternating current grid or in a case that an output power Ppv of the photovoltaic array is less than the rated power capacity Pdc of the DC to DC voltage booster circuit. Or, the control circuit controls the bypass element to be turned on and controls the DC to DC voltage booster circuit not to operate, in a case that a voltage Upv_mppt at a maximum power point of the photovoltaic array is not less than a voltage peak of the alternating current grid or in a case that an output power Ppv of the photovoltaic array is not less than the rated power capacity Pdc of the DC to DC voltage booster circuit.

Further, the bypass element includes an electric switch, a high-voltage direct-current relay, a high-voltage MOSFET or a high-voltage IGBT.

Further, the DC to AC inverter circuit employs a two-level topology or a multilevel topology.

Further, the DC to AC inverter circuit includes a three-phase inverter circuit or a single-phase inverter circuit.

A DC to DC voltage booster circuit applied to the grid-connected single-stage photovoltaic inverter described above is further provided according to the present disclosure.

A photovoltaic power generation system is further provided according to the present disclosure, which includes the grid-connected single-stage photovoltaic inverter described above and a photovoltaic array.

A control method for the grid-connected single-stage photovoltaic inverter described above is further provided according to the independent claim 7, and the control method includes:
obtaining a voltage Upv_mppt at a maximum power point of the photovoltaic array; obtaining an output power Ppv of the photovoltaic array; comparing the voltage Upv_mppt at the maximum power point of the photovoltaic array with a voltage peak of the alternating current grid; comparing the output power Ppv of the photovoltaic array with the rated power capacity Pdc of the DC to DC voltage booster circuit; and controlling the bypass element to be turned on or turned off and controlling the DC to DC voltage booster circuit to operate or not to operate based on a comparison result.

Further, the controlling the bypass element to be turned on or turned off and controlling the DC to DC voltage booster circuit to operate or not to operate based on a comparison result includes: controlling the bypass element to be turned off and controlling the DC to DC voltage booster circuit to operate, in a case that the voltage Upv_mppt at the maximum power point of the photovoltaic array is less than the voltage peak of the alternating current grid or in a case that the output power Ppv of the photovoltaic array is less than the rated power capacity Pdc of the DC to DC voltage booster circuit; and controlling the bypass element to be turned on and controlling the DC to DC voltage booster circuit not to operate, in a case that the voltage Upv_mppt at the maximum power point of the photovoltaic array is not less than the voltage peak of the alternating current grid or in a case that the output power Ppv of the photovoltaic array is not less than the rated power capacity Pdc of the DC to DC voltage booster circuit.

Compared with the conventional technology, the present disclosure has the following advantages.

Compared with a conventional grid-connected single-stage photovoltaic inverter, in the grid-connected single-stage photovoltaic inverter according to the present disclosure, a parallel circuit in which the DC to DC voltage booster circuit and the bypass element are connected in parallel is connected in series between the photovoltaic array and the DC to AC inverter circuit, and the rated power capacity Pdc of the DC to DC voltage booster circuit is less than the rated power capacity Pac of the DC to AC inverter circuit. The DC to DC voltage booster circuit is controlled not to operate in a long time period in which radiation is high, such as the daytime, thereby improving efficiency. The DC to DC voltage booster circuit is controlled to operate in a situation of low radiation such as in the morning and evening, or on a cloudy or rainy day, to improve a direct current bus voltage of the grid-connected photovoltaic inverter. As a result, the grid-connected photovoltaic inverter meets a grid connection condition, and can perform grid-connected power generation, which increases power generation amount. In addition, since the rated power capacity Pdc of the DC to DC voltage booster circuit is less than the rated power capacity Pac of the DC to AC inverter circuit, investment cost is greatly reduced.

### BRIEF DESCRIPTION OF THE DRAWINGS

In order to illustrate technical solutions in embodiments of the present disclosure or in the conventional technology more clearly, drawings used in the description of the embodiments or the conventional technology are introduced briefly hereinafter. Apparently, the drawings described hereinafter merely illustrate some embodiments of the present disclosure, and other drawings may be obtained by those skilled in the art based on these drawings without any creative efforts.
Figure 1 is a schematic diagram of a grid-connected single-stage photovoltaic inverter according to a first embodiment of the present disclosure;
Figure 2 is a schematic diagram of a grid-connected single-stage photovoltaic inverter according to a second embodiment of the present disclosure; and
Figure 3 is a schematic diagram of a DC to DC voltage booster circuit according to an embodiment of the present disclosure.

### DETAILED DESCRIPTION OF THE EMBODIMENTS

In order to make the above object, features, and advantages of the present disclosure clearer, embodiments of the present disclosure are described in detail hereinafter in conjunction with the drawings.

A grid-connected single-stage photovoltaic inverter, which can increase power generation amount as compared with a conventional grid-connected single-stage photovoltaic inverter, is provided according to the present disclosure.

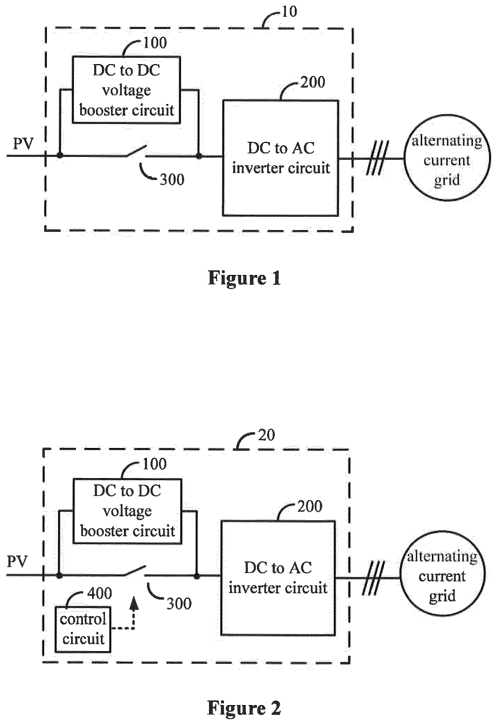

Reference is made to Figure 1, which is a schematic diagram of a grid-connected single-stage photovoltaic inverter according to a first embodiment of the present disclosure. The grid-connected single-stage photovoltaic inverter 10 includes a DC to AC inverter circuit 200, a DC to DC voltage booster circuit 100 and a bypass element 300. An output of the DC to AC inverter circuit 200 is connected to an alternating current grid. The DC to DC voltage booster circuit 100 is connected in series between a photovoltaic array PV and the DC to AC inverter circuit 200. The bypass element 300 is connected in parallel with the DC to DC voltage booster circuit 100. A power capacity Pdc of the DC to DC voltage booster circuit 100 is less than a power capacity Pac of the DC to AC inverter circuit 200.

In the grid-connected single-stage photovoltaic inverter according to the embodiment of the present disclosure, a parallel circuit in which the DC to DC voltage booster circuit and the bypass element are connected in parallel is connected to a front end of the DC to AC inverter circuit of a conventional grid-connected single-stage photovoltaic inverter. As a result, an operating range of direct current input voltage is expanded for the grid-connected photovoltaic inverter. The DC to DC voltage booster circuit operates in a situation of low radiation such as in the morning and evening, or on a cloudy or rainy day, to improve a direct current bus voltage of the grid-connected photovoltaic inverter. In this case, the grid-connected photovoltaic inverter meets a grid connection condition, and can perform grid-connected power generation, which increases power generation amount. In addition, since the rated power capacity Pdc of the DC to DC voltage booster circuit is less than the rated power capacity Pac of the DC to AC inverter circuit, investment cost is greatly reduced. Benefits for investment cost recovery are significant, especially in a case of a larger power station which needs multiple grid-connected photovoltaic inverters.

Optionally, configuration of the rated power capacities of the DC to DC voltage booster circuit and the DC to AC inverter circuit may be: Pdc≤0.5Pac, which is specifically determined based on factors such as radiation of an installation location and historical weather situations. A DC to AC inverter circuit having a rated power capacity of 100KW is taken as an example. For solving a technical problem that grid-connected power generation can not be performed in a situation of low radiation such as in the morning and evening, or on a cloudy or rainy day, a conventional though is to provide a DC to DC voltage booster circuit having a matched power. In the present disclosure, a range for configuring a rated power capacity of the DC to DC voltage booster circuit is from 0 to 50KW, and the power may be 10KW. Compared with the solution of providing a DC to DC voltage booster circuit having a matched power, investment cost is greatly reduced while power generation amount is increased.

Reference is made to Figure 2, which shows a grid-connected single-stage photovoltaic inverter according to a second embodiment of the present disclosure. Compared with the first embodiment, the grid-connected single-stage photovoltaic inverter 20 further includes a control circuit 400 configured to control the bypass element 300 to be turned on or turned off.

In a case that a voltage Upv_mppt at a maximum power point of the photovoltaic array PV is less than a voltage peak of the alternating current grid or in a case that an output power Ppv of the photovoltaic array PV is less than the rated power capacity Pdc of the DC to DC voltage booster circuit 100, the control circuit 400 controls the bypass element 300 to be turned off and controls the DC to DC voltage booster circuit 100 to operate. In a case that a voltage Upv_mppt at a maximum power point of the photovoltaic array PV is not less than a voltage peak of the alternating current grid or in a case that an output power Ppv of the photovoltaic array is not less than the rated power capacity Pdc of the DC to DC voltage booster circuit, the control circuit 400 controls the bypass element 300 to be turned on and controls the DC to DC voltage booster circuit 100 not to operate.

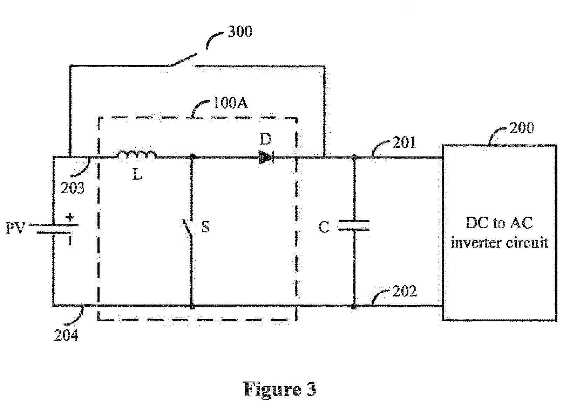

Reference is made to Figure 3, which is schematic diagram of a DC to DC voltage booster circuit according to an embodiment of the present disclosure. A direct current bus capacitor C is connected between the DC to DC voltage booster circuit 100A and the DC to AC inverter circuit 200. The DC to DC voltage booster circuit 100A includes an inductor L, a diode D and a first switch S. A first terminal of the inductor L is connected to a first terminal of the bypass element 300 to serve as a positive input electrode 203 of the DC to DC voltage booster circuit 100A. The positive input electrode 203 of the DC to DC voltage booster circuit 100A is connected to a positive electrode of the photovoltaic array PV. A second terminal of the inductor L is connected to an anode of the diode D. A cathode of the diode D is connected to a second terminal of the bypass element 300 to serve as a positive output electrode of the DC to DC voltage booster circuit 100A. The positive output electrode of the DC to DC voltage booster circuit 100A is connected to a positive electrode 201 of a direct current bus of the DC to AC inverter circuit 200. A first terminal of the first switch S is connected to a common connection point of the inductor L and the diode D. A second terminal of the first switch S is connected to a negative electrode of the DC to DC voltage booster circuit 100A. The negative electrode of the DC to DC voltage booster circuit 100A is connected to a negative electrode of the photovoltaic array PV and a negative electrode 202 of the direct current bus of the DC to AC inverter circuit 200.

As an alternative, the DC to DC voltage booster circuit may be of any circuit structure which can achieve a voltage boosting function, such as a non-isolated forward circuit, a non-isolated flyback circuit or a non-isolated push-pull circuit, and is not limited by the present disclosure.

In all embodiments of the present disclosure, the bypass element 300 may be any electrical element which can achieve a function of turning on and turning off a circuit, such as an electric switch, a high-voltage direct-current relay, a high-voltage MOSFET or a high-voltage IGBT, or may be a circuit which can achieve the same function.

The DC to AC inverter circuit according to any one of the embodiments of the present disclosure may employ any circuit topology which can convert a direct current into an alternating current, such as a two-level topology, or may employ a multilevel topology such as three-level topology or five-level topology, and is not limited by the present disclosure.

Further, the DC to AC inverter circuit according to any of one of the embodiments of the present disclosure may be a single-phase inverter circuit, or may be a three-phase inverter circuit, which is not limited by the present disclosure.

A DC to DC voltage booster circuit applied to the grid-connected single-stage photovoltaic inverter described above is further provided according to an embodiment of the present disclosure. Reference is made to the above descriptions for details.

A control method for the grid-connected single-stage photovoltaic inverter described above is further provided according to an embodiment of the present disclosure. The method includes steps S11 to S15.

In step S11, a voltage Upv_mppt at a maximum power point of the photovoltaic array is obtained.

In step S12, an output power Ppv of the photovoltaic array is obtained.

In step S13, the voltage Upv_mppt at the maximum power point of the photovoltaic array is compared with a voltage peak of the alternating current grid.

In step S14, the output power Ppv of the photovoltaic array is compared with the rated power capacity Pdc of the DC to DC voltage booster circuit.

In step S15, the bypass element 300 is controlled to be turned on or turned off and the DC to DC voltage booster circuit is controlled to operate or not to operate based on a comparison result.

Further, the controlling the bypass element 300 to be turned on or turned off and controlling the DC to DC voltage booster circuit to operate or not to operate based on a comparison result in step S15 includes: controlling the bypass element 300 to be turned off and controlling the DC to DC voltage booster circuit to operate, in a case that the voltage Upv_mppt at the maximum power point of the photovoltaic array is less than the voltage peak of the alternating current grid or in a case that the output power Ppv of the photovoltaic array is less than the rated power capacity Pdc of the DC to DC voltage booster circuit; or controlling the bypass element 300 to be turned on and controlling the DC to DC voltage booster circuit not to operate, in a case that the voltage Upv_mppt at the maximum power point of the photovoltaic array is not less than the voltage peak of the alternating current grid or in a case that the output power Ppv of the photovoltaic array is not less than the rated power capacity Pdc of the DC to DC voltage booster circuit.

A photovoltaic power generation system is further provided according to an embodiment of the present disclosure, which includes the grid-connected single-stage photovoltaic inverter according to the above embodiments and a photovoltaic array.

Benefits of the present disclosure are described with an example of a photovoltaic power generation system of 100KW.

For the photovoltaic power generation system of 100KW provided with the same photovoltaic array: in a case that a conventional grid-connected single-stage photovoltaic inverter (simply referred to as single INV) is provided for the photovoltaic power generation system, a rated power capacity of an inverter circuit is at least 100KW; in a case that a conventional grid-connected two-stage photovoltaic inverter (simply referred to as symmetric DC-DC+INV) of a voltage booster circuit (DC-DC) and an inverter circuit (INV) having matched powers is provided for the photovoltaic power generation system, rated power capacities of the booster circuit and the inverter circuit need to be matched and to be at least 100KW; in a case that the grid-connected single-stage photovoltaic inverter (simply referred to as asymmetric DC-DC+INV) according to the embodiments of the present disclosure is provided for the photovoltaic power generation system, a rated power capacity of an inverter circuit is at least 100KW, and a rated power capacity of the voltage booster circuit is assumed to be 8KW. Cost of the voltage booster circuit is 0.1 Yuan/watt, and cost of the inverter circuit is 0.2 Yuan/watt.

It is assumed that an output power of the photovoltaic array is up to 8KW in a situation of low radiation such as in the morning and evening, or on a cloudy or rainy day. Since the single INV system does not include a DC-DC, the single INV system does not meet a grid connection condition, and can not perform grid-connected power generation. Both the symmetric DC-DC+INV and the asymmetric DC-DC+INV can generate power normally. It is assumed that there are 365 days in one year and a radiation condition for the photovoltaic power generation system is the same for every day, on average, a total time period in which the output power of the photovoltaic array for every day can not be ignored and can not meet the grid connection condition of the single INV. Through calculation based on a current subsidy of 1.5 Yuan/watt, design parameters and power generation amount of the single INV, the symmetric DC-DC+INV and the asymmetric DC-DC+INV are listed as follows.

| | single INV | symmetric DC-DC+INV | asymmetric DC-DC+INV |
|---|---|---|---|
| power of DC-DC | 0 | 100KW | 8KW |
| power of INV | 100KW | 100KW | 100KW |
| cost of DC-DC | 0 | 10000 Yuan | 800 Yuan |
| cost of INV | 20000 Yuan | 20000 Yuan | 20000 Yuan |
| total cost of inverter | 20000 Yuan | 30000 Yuan | 20800 Yuan |
| extra daily power generation amount | 0 | 8KWh | 8KWh |
| extra annual power generation revenue | 0 | 4380 Yuan | 4380 Yuan |

For the three systems, the single INV system is cheapest, and the symmetric DC-DC+INV is most expensive. Extra annual power generation revenue of the single INV is 0, and extra annual power generation revenue of the symmetric DC-DC+INV is equal to that of the asymmetric DC-DC+INV. It can be seen that, the photovoltaic power generation system provided with the asymmetric DC-DC+INV is most cost effective and has the fastest speed of investment cost recovery.

Compared with a conventional grid-connected single-stage photovoltaic inverter, in the grid-connected single-stage photovoltaic inverter according to the present disclosure, a parallel circuit in which the DC to DC voltage booster circuit and the bypass element are connected in parallel is connected in series between the photovoltaic array and the DC to AC inverter circuit, and the rated power capacity Pdc of the DC to DC voltage booster circuit is less than the rated power capacity Pac of the DC to AC inverter circuit. The DC to DC voltage booster circuit is controlled not to operate in a time period in which radiation is high, such as the daytime, so that the operating efficiency of the grid-connected single-stage photovoltaic inverter is high. The DC to DC voltage booster circuit is controlled to operate in a situation of low radiation such as in the morning and evening, or on a cloudy or rainy day, to improve a direct current bus voltage of the grid-connected photovoltaic inverter. As a result, the grid-connected photovoltaic inverter meets a grid connection condition, and can perform grid-connected power generation, which increases power generation amount. In addition, since the rated power capacity Pdc of the DC to DC voltage booster circuit is less than the rated power capacity Pac of the DC to AC inverter circuit, investment cost is greatly reduced, and cost recovery is speeded up.

The above descriptions are only preferred embodiments of the present disclosure and should not be interpreted as limiting of the present disclosure in any form. Although the present disclosure is disclosed by the above preferred embodiments, the preferred embodiments are not to limit the present disclosure. Various changes and modifications to the technical solutions of the present disclosure can be made by those skilled in the art based on the above method and technical contents within the scope of the technical solutions of the present disclosure. However, the scope of the invention is solely defined by the appended claims.

## Claims

1. A grid-connected photovoltaic inverter (10, 20), comprising:
one DC to AC inverter circuit (200), wherein an output of the DC to AC inverter circuit is configured to be connected to an alternating current grid;
one DC to DC voltage booster circuit (100, 100A) configured to be connected in series between a photovoltaic array and the DC to AC inverter circuit;
one bypass element (300) connected in parallel with the DC to DC voltage booster circuit; and
a control circuit (400) configured to control the bypass element to be turned on or turned off;
**characterized in that**,
a rated power capacity Pdc of the DC to DC voltage booster circuit is less than a rated power capacity Pac of the DC to AC inverter circuit;
the control circuit is configured to control the bypass element to be turned off and control the DC to DC voltage booster circuit to operate, in a case that a voltage Upv_mppt at a maximum power point of the photovoltaic array is less than a voltage peak of the alternating current grid or in a case that an output power Ppv of the photovoltaic array is less than the rated power capacity Pdc of the DC to DC voltage booster circuit; and
the control circuit is configured to control the bypass element to be turned on and control the DC to DC voltage booster circuit not to operate, in a case that a voltage Upv_mppt at a maximum power point of the photovoltaic array is not less than a voltage peak of the alternating current grid or in a case that an output power Ppv of the photovoltaic array is not less than the rated power capacity Pdc of the DC to DC voltage booster circuit.

2. The grid-connected photovoltaic inverter according to claim 1, wherein the rated power capacity Pdc of the DC to DC voltage booster circuit being less than the rated power capacity Pac of the DC to AC inverter circuit comprises: Pdc<0.5Pac.

3. The grid-connected photovoltaic inverter according to any one of claims 1 to 2, wherein the bypass element comprises an electric switch, a high-voltage direct-current relay, a high-voltage MOSFET or a high-voltage IGBT.

4. The grid-connected photovoltaic inverter according claim 1 or 2, wherein the DC to AC inverter circuit employs a two-level topology or a multilevel topology.

5. The grid-connected photovoltaic inverter according to claim 1 or 2, wherein the DC to AC inverter circuit comprises a three-phase inverter circuit or a single-phase inverter circuit.

6. A photovoltaic power generation system, comprising the grid-connected photovoltaic inverter according to claim 1 or 2 and a photovoltaic array.

7. A control method for the grid-connected photovoltaic inverter according to claim 1 or claim 2, comprising:
obtaining a voltage Upv_mppt at a maximum power point of the photovoltaic array;
obtaining an output power Ppv of the photovoltaic array;
comparing the voltage Upv_mppt at the maximum power point of the photovoltaic array with a voltage peak of the alternating current grid;
comparing the output power Ppv of the photovoltaic array with the rated power capacity Pdc of the DC to DC voltage booster circuit; and
controlling the bypass element to be turned on or turned off and controlling the DC to DC voltage booster circuit to operate or not to operate based on a comparison result.

8. The control method for the grid-connected photovoltaic inverter according to claim 7, wherein the controlling the bypass element to be turned on or turned off and controlling the DC to DC voltage booster circuit to operate or not to operate based on a comparison result comprises:
controlling the bypass element to be turned off and controlling the DC to DC voltage booster circuit to operate, in a case that the voltage Upv_mppt at the maximum power point of the photovoltaic array is less than the voltage peak of the alternating current grid or in a case that the output power Ppv of the photovoltaic array is less than the rated power capacity Pdc of the DC to DC voltage booster circuit; and
controlling the bypass element to be turned on and controlling the DC to DC voltage booster circuit not to operate, in a case that the voltage Upv_mppt at the maximum power point of the photovoltaic array is not less than the voltage peak of the alternating current grid or in a case that the output power Ppv of the photovoltaic array is not less than the rated power capacity Pdc of the DC to DC voltage booster circuit.

## Patentansprüche

1. Fotovoltaiknetzgekoppelter Wechselrichter (10, 20), umfassend:
eine DC-zu-AC-Wechselrichterschaltung (200), wobei ein Ausgang der DC-zu-AC-Wechselrichterschaltung dazu ausgebildet ist, mit einem Wechselstromnetz verbunden zu werden;
eine DC-zu-DC-Spannungs-Boosterschaltung (100, 100A), die dazu ausgebildet ist, zwischen einer Fotovoltaikanlage und der DC-zu-AC-Wechselrichterschaltung in Reihe geschaltet zu werden;
ein parallel zu der DC-zu-DC-Spannungs-Boosterschaltung geschaltetes Umgehungselement (300); und
eine Steuerschaltung (400), die dazu ausgebildet ist, das Umgehungselement so zu steuern, dass es eingeschaltet oder ausgeschaltet wird;
**dadurch gekennzeichnet, dass**
eine Nennleistungskapazität Pdc der DC-zu-DC-Spannungs-Boosterschaltung kleiner als eine Nennleistungskapazität Pac der DC-zu-AC-Wechselrichterschaltung ist;
die Steuerschaltung dazu ausgebildet ist, das Umgehungselement so zu steuern, dass es ausgeschaltet wird, und die DC-zu-DC-Spannungs-Boosterschaltung so zu steuern, dass sie betrieben wird, in einem Fall, dass eine Spannung Upv_mppt an einem maximalen Leistungspunkt der Fotovoltaikanlage kleiner als eine Spannungsspitze des Wechselstromnetzes ist, oder in einem Fall, dass eine Ausgangsleistung Ppv der Fotovoltaikanlage kleiner als die Nennleistungskapazität Pdc der DC-zu-DC-Spannungs-Boosterschaltung ist;
die Steuerschaltung dazu ausgebildet ist, das Umgehungselement so zu steuern, dass es eingeschaltet wird, und die DC-zu-DC-Spannungs-Boosterschaltung so zu steuern, dass sie nicht betrieben wird, in einem Fall, dass eine Spannung Upv_mppt an einem maximalen Leistungspunkt der Fotovoltaikanlage nicht kleiner als eine Spannungsspitze des Wechselstromnetzes ist, oder in einem Fall, dass eine Ausgangsleistung Ppv der Fotovoltaikanlage nicht kleiner als die Nennleistungskapazität Pdc der DC-zu-DC-Spannungs-Boosterschaltung ist.

2. Fotovoltaiknetzgekoppelter Wechselrichter nach Anspruch 1, wobei die Nennleistungskapazität Pdc der DC-zu-DC-Spannungs-Boosterschaltung, die kleiner als die Nennleistungskapazität Pac der DC-zu-AC-Wechselrichterschaltung ist, umfasst: Pdc≤0,5Pac.

3. Fotovoltaiknetzgekoppelter Wechselrichter nach einem der Ansprüche 1 bis 2, wobei das Umgehungselement einen elektrischen Schalter, ein Hochspannungs-Gleichstromrelais, einen Hochspannungs-MOSFET oder einen Hochspannungs-IGBT umfasst.

4. Fotovoltaiknetzgekoppelter Wechselrichter nach Anspruch 1 oder 2, wobei die DC-zu-AC-Wechselrichterschaltung eine zweistufige Topologie oder eine mehrstufige Topologie verwendet.

5. Fotovoltaiknetzgekoppelter Wechselrichter nach Anspruch 1 oder 2, wobei die DC-zu-AC-Wechselrichterschaltung eine Dreiphasen-Wechselrichterschaltung oder eine Einphasen-Wechselrichterschaltung umfasst.

6. Fotovoltaik-Stromerzeugungssystem, umfassend den Fotovoltaiknetzgekoppelten Wechselrichter nach Anspruch 1 oder 2 und eine Fotovoltaikanlage.

7. Steuerverfahren für den Fotovoltaiknetzgekoppelten Wechselrichter nach Anspruch 1 oder Anspruch 2, umfassend:
Erzielen einer Spannung Upv_mppt an einem maximalen Leistungspunkt der Fotovoltaikanlage;
Erzielen einer Ausgangsleistung Ppv der Fotovoltaikanlage;
Vergleichen der Spannung Upv_mppt am maximalen Leistungspunkt der Fotovoltaikanlage mit einer Spannungsspitze des Wechselstromnetzes;
Vergleichen der Ausgangsleistung Ppv der Fotovoltaikanlage mit der Nennleistungskapazität Pdc der DC-zu-DC-Spannungs-Boosterschaltung; und
Steuern des einzuschaltenden oder auszuschaltenden Umgehungselements und Steuern der DC-zu-DC-Spannungs-Boosterschaltung zum Betrieb oder zum Nichtbetrieb basierend auf einem Vergleichsergebnis.

8. Steuerverfahren für den Fotovoltaiknetzgekoppelten Wechselrichter nach Anspruch 7, wobei das Steuern des einzuschaltenden oder auszuschaltenden Umgehungselements und das Steuern der DC-zu-DC-Spannungs-Boosterschaltung zum Betrieb oder zum Nichtbetrieb basierend auf einem Vergleichsergebnis umfasst:
Steuern des auszuschaltenden Umgehungselements und Steuern der DC-zu-DC-Spannungs-Boosterschaltung zum Betrieb in einem Fall, dass die Spannung Upv_mppt am maximalen Leistungspunkt der Fotovoltaikanlage kleiner als die Spannungsspitze des Wechselstromnetzes ist, oder in einem Fall, dass die Ausgangsleistung Ppv der Fotovoltaikanlage kleiner als die Nennleistungskapazität Pdc der DC-zu-DC-Spannungs-Boosterschaltung ist; und
Steuern des einzuschaltenden Umgehungselements und Steuern der DC-zu-DC-Spannungs-Boosterschaltung zum Nichtbetrieb in einem Fall, dass die Spannung Upv_mppt am maximalen Leistungspunkt der Fotovoltaikanlage nicht kleiner als die Spannungsspitze des Wechselstromnetzes ist, oder in einem Fall, dass die Ausgangsleistung Ppv der Fotovoltaikanlage nicht kleiner als die Nennleistungskapazität Pdc der DC-zu-DC-Spannungs-Boosterschaltung ist.

## Revendications

1. Onduleur photovoltaïque connecté au réseau (10, 20), comprenant :
un circuit onduleur CC à CA (200), une sortie du circuit onduleur CC à CA étant configurée pour être connectée à un réseau à courant alternatif ;
un circuit survolteur CC à CC (100, 100A) configuré pour être connecté en série entre un réseau photovoltaïque et le circuit onduleur CC à CA ;
un élément de dérivation (300) connecté en parallèle au circuit survolteur CC à CC ; et
un circuit de commande (400) configuré pour commander l'élément de dérivation pour qu'il soit allumé ou éteint ;
**caractérisé en ce que**
une capacité de puissance nominale Pdc du circuit survolteur CC à CC est inférieure à une capacité de puissance nominale Pac du circuit onduleur CC à CA;
le circuit de commande est configuré pour commander l'élément de dérivation d'être éteint et commander le circuit survolteur CC à CC pour fonctionner, dans le cas où une tension Uv _ mppt à un point de puissance maximale du réseau photovoltaïque serait inférieure à un pic de tension du réseau à courant alternatif, ou dans le cas où une puissance de sortie Ppv du réseau photovoltaïque serait inférieure à la capacité de puissance nominale Pdc du circuit survolteur CC à CC ; et
le circuit de commande est configuré pour commander l'élément de dérivation d'être allumé et commander le circuit survolteur CC à CC pour ne pas fonctionner, dans le cas où une tension Uv _ mppt à un point de puissance maximale du réseau photovoltaïque ne serait pas inférieure à un pic de tension du réseau à courant alternatif, ou dans le cas où une puissance de sortie Ppv du réseau photovoltaïque serait inférieure à la capacité de puissance nominale Pdc du circuit survolteur CC à CC.

2. Onduleur photovoltaïque connecté au réseau selon la revendication 1, dans lequel la capacité de puissance nominale Pdc du circuit survolteur CC à CC étant inférieure à la capacité de puissance nominale Pac du circuit onduleur CC à CA comprend : Pdc≤0,5Pac.

3. Onduleur photovoltaïque connecté au réseau selon l'une quelconque des revendications 1 à 2, dans lequel l'élément de dérivation comprend un commutateur électrique, un relais à courant continu haute tension, un MOSFET haute tension ou un IGBT haute tension.

4. Onduleur photovoltaïque connecté au réseau selon la revendication 1 ou 2, dans lequel le circuit onduleur CC à CA emploie une topologie à deux niveaux ou une topologie à plusieurs niveaux.

5. Onduleur photovoltaïque connecté au réseau selon la revendication 1 ou 2, dans lequel le circuit onduleur CC à CA comprend un circuit onduleur triphasé ou un circuit onduleur monophasé.

6. Système de génération de puissance photovoltaïque, comprenant l'onduleur photovoltaïque connecté au réseau selon la revendication 1 ou 2 et un réseau photovoltaïque.

7. Procédé de commande pour l'onduleur photovoltaïque connecté au réseau selon la revendication 1 ou la revendication 2, comprenant :
obtenir une tension Upv_mppt à un point de puissance maximale du réseau photovoltaïque ;
obtenir une puissance de sortie Ppv du réseau photovoltaïque ;
comparer la tension Upv_mppt au point de puissance maximale du réseau photovoltaïque avec un pic de tension du réseau à courant alternatif ;
comparer la puissance de sortie Ppv du réseau photovoltaïque avec la capacité de puissance nominale Pdc du circuit survolteur CC à CC ; et
commander l'élément de dérivation pour qu'il soit allumé ou éteint et commander le circuit survolteur CC à CC pour qu'il fonctionne ou ne fonctionne pas sur la base d'un résultat de comparaison.

8. Procédé de commande pour l'onduleur photovoltaïque connecté au réseau selon la revendication 7, dans lequel la commande de l'élément de dérivation devant être allumé ou éteint et la commande du circuit survolteur CC à CC pour fonctionner ou non pour fonctionner sur la base d'un résultat de comparaison comprend les étapes consistant à :
commander l'élément de dérivation d'être éteint et commander le circuit survolteur CC à CC pour fonctionner, dans le cas où la tension Uv _ mppt au point de puissance maximale du réseau photovoltaïque serait inférieure au pic de tension du réseau à courant alternatif, ou dans le cas où la puissance de sortie Ppv du réseau photovoltaïque serait inférieure à la capacité de puissance nominale Pdc du circuit survolteur CC à CC ; et
commander l'élément de dérivation d'être allumé et commander le circuit survolteur CC à CC pour ne pas fonctionner, dans le cas où la tension Uv _ mppt au point de puissance maximale du réseau photovoltaïque ne serait pas inférieure au pic de tension du réseau à courant alternatif, ou dans le cas où la puissance de sortie Ppv du réseau photovoltaïque ne serait pas inférieure à la capacité de puissance nominale Pdc du circuit survolteur CC à CC.
